# EUROPÄISCHE PATENTSCHRIFT

(11) **EP 4 098 092 B1**
(45) Veröffentlichungstag und Bekanntmachung des Hinweises auf die Patenterteilung: **01.01.2025**
(21) Anmeldenummer: 22177301.3
(22) Anmeldetag: 03.06.2022
(51) Int. Cl.: A01B 59/00, A01B 59/06, B60D 1/00, A01B 51/02, B62D 51/04, B62D 49/06, B62D 53/02

(54) **SCHNELLWECHSELSYSTEM FÜR EIN FAHRZEUG**
QUICK CHANGE SYSTEM FOR A VEHICLE
SYSTÈME DE CHANGEMENT RAPIDE POUR UN VÉHICULE

(30) Priorität: 03.06.2021 CH 6442021
(43) Veröffentlichungstag der Anmeldung: 07.12.2022
(73) Patentinhaber: Beat Walser GmbH Land- und Baumaschinen, 7204 Untervaz (CH)
(72) Erfinder: Walser, Beat, 7212 Seewis (CH)
(74) Vertreter: Keller Schneider Patent- und Markenanwälte AG

(56) Entgegenhaltungen:
- DE-A1- 1 505 501
- DE-A1- 1 632 816
- DE-A1- 4 213 724
- US-A- 5 743 339
- US-A1- 2020 404 828

## Beschreibung

### Technisches Gebiet

Die vorliegende Erfindung betrifft ein werkzeugloses Schnellwechselsystem für ein Einachs- oder Mehrachsfahrzeug, vorzugsweise einen einachsigen Motormäher, Kran oder Pflug. Das Schnellwechselsystem ist zum Ankuppeln eines Anbaugeräts, beispielsweise eines Mähwerks. Das Ankuppeln soll in einer im Wesentlichen horizontalen Bewegung erfolgen können, insbesondere beim Anfahren. Das Schnellwechselsystem umfasst ein mit dem Einachs- oder Mehrachsfahrzeug fest verbundenes Anschlusselement sowie eine Basisplatte für ein Anbaugerät. Die Basisplatte umfasst eine Fanglasche zur Aufnahme eines keilförmigen Verriegelungselements, welches zwei in einem spitzen Winkel zueinander verlaufende, gegenüber voneinander liegende Klemmflächen aufweist, wobei die Fanglasche das Anschlusselement durchstossen kann. Das keilförmige Verriegelungselement ist derart ausgestaltet und angeordnet, dass es in der Fanglasche aufnehmbar ist und diese durchstossen kann, wodurch die Basisplatte mit dem Anschlusselement lösbar verbindbar ist.

### Stand der Technik

Bekannt sind insbesondere im Bereich der Landwirtschaft diverse Schnellwechselsysteme für einachsige oder mehrachsige Fahrzeuge, welche ein Ankuppeln verschiedenster Anbaugeräte wie beispielsweise ein Mähwerk ermöglichen.

Aus dem Stand der Technik ist ein werkzeugloses Schnellwechselsystem für einen einachsigen Motormäher der Firma Brielmaier bekannt. Dieses werkzeuglose Schnellwechselsystem umfasst ein mit dem einachsigen Motormäher fest verbundenes Anschlusselement sowie eine korrespondierende Basisplatte für ein Anbaugerät, wobei mittels eines händig betätigbaren Hebels eine feste Verbindung herstellbar ist.

Dieses bekannte Schnellwechselsystem hat den Nachteil, dass bei grösseren Anbaugeräten wie beispielsweise bei grösseren Mähwerken mit einer Balkenbreite von drei Metern und mehr die resultierende mechanische Beanspruchung auf Dauer zu gross ist, wodurch die dazu notwendige Verriegelung auf Dauer nicht mehr formschlüssig ist und somit die Verbindung nicht mehr fest ist.

Im Weiteren sind gerade bei landwirtschaftlichen Fahrzeugen zum Ankuppeln von Anbaugeräten Dreipunkt-Schnellwechselsysteme in Form einer Dreipunktkupplung bekannt wie beispielsweise das sogenannte Euro-Schnellwechselsystem. Die Funktionsweise dieses Euro-Schnellwechselsystems beinhaltet im Wesentlichen einen mit dem einachsigen oder mehrachsigen Fahrzeug fest verbundenen, dreieckigen Schnellwechselrahmen mit drei Riegelaufnahmen. Zur Herstellung einer festen Verbindung zwischen Schnellwechselrahmen des Einachs- oder Mehrachsfahrzeugs und einer Basisplatte des Anbaugeräts werden üblicherweise zunächst zwei Riegelbolzen in korrespondierenden Riegelaufnahmen aufgenommen und dann typischerweise in einer Schwenkbewegung der dritte Riegelbolzen in einer korrespondierenden Riegelaufnahme aufgenommen.

Dieses bekannte Euro-Schnellwechselsystem in Form einer Dreipunktkupplung hat den Nachteil, dass die Handhabung besonders umständlich ist aufgrund der Notwendigkeit einer Schwenkbewegung beim Ankuppeln des Anbaugeräts.

Im Weiteren ist aus dem Dokument DE 1 632 816 A1 ein einachsiger Motormäher bekannt mit einem werkzeuglosen Schnellwechselsystem zur Befestigung des Mähbalken-Tragbockes, welches unter anderem eine Fanglasche sowie ein korrespondierendes, keilförmiges Verriegelungselement umfasst.

Dieses aus dem Dokument DE 1 632 816 A1 bekannte, werkzeuglose Schnellwechselsystem hat den Nachteil, dass dieses einer grösseren mechanischen Beanspruchung nicht standhält, insbesondere bei Mähwerken mit Balkenbreiten von drei Metern und mehr oder bei anderen schweren Anbaugeräten wie beispielsweise einem Mulcher, einem Multitwister oder ähnlichen Geräten.

Ein anderes Verbindungssystem zwischen einem Motorfahrzeug und einem Gerät ist aus der DE 1505501 bekannt. Die Kupplung wird durch drei oder vier Bolzen erreicht, die eine Platte durchstossen und anschliessend durch drei oder vier Riegel gesichert werden, die durch Schlitze in den Bolzen verlaufen. Diese starre Verriegelung kann wahlweise mittels eines Hydraulikzylinders, eines Elektromotors oder von Hand mit einem Hebel in die vorgesehenen Führungen eingeführt werden, wobei jeweils alle Riegel simultan verschlossen werden, was aufwendige mechanische Kopplungen und Verbindungen benötigt, was wiederum zu viel Spiel führt. Daher ist mit hohem Verschleiss zu rechnen, insbesondere in Anbetracht der hohen Kräfte, die während der Arbeit auf die Geräte einwirken.

In der DE 4213724 ist zudem eine Kupplung eines Gerätes zu einem Motorfahrzeug beschrieben, bei welchem das Gerät von oben eingehakt werden muss, bevor es an beiden seitlichen Enden gesichert werden kann. Die Sicherung geschieht zentral durch verstellbare, keilförmige Schieber, welche mittels Hydraulikzylinder in entsprechende seitliche Aussparungen eingeführt werden. Ein Druckspeicher sorgt auch bei abgeschalteter Druckmittelversorgung für eine Druckbeaufschlagung der Arretierbolzen.

### Darstellung der Erfindung

Die vorliegende Erfindung hat sich zur Aufgabe gestellt, ein eingangs erwähntes werkzeugloses Schnellwechselsystem bereitzustellen, wobei die erwähnten Nachteile des bekannten Standes der Technik überwunden und wobei insbesondere die mechanische Stabilität gerade bei grösseren Anbaugeräten verbessert wird. Insbesondere soll die Mechanik vereinfacht werden bei gleichzeitiger Verbesserung des spielfreien Halts zwischen dem Fahrzeug und dem Anschlusselement.

Diese Aufgaben erfüllt ein Schnellwechselsystem mit den Merkmalen des Patentanspruches 1.

Erfindungsgemäss umfasst die Basisplatte genau eine zentrale Fanglasche zur zentralen Aufnahme eines einzigen keilförmigen Verriegelungselements, wobei zudem das keilförmige Verriegelungselement im verriegelten Zustand unter einer Vorspannung steht, wodurch die erste Klemmfläche gegen die Fanglasche der Basisplatte und die zweite Klemmfläche beidseitig der Fanglasche gegen das Anschlusselement gepresst werden kann, um die Basisplatte spielfrei und zentral am Anschlusselement zu sichern.

Im Sinne der vorliegenden Erfindung wird anhand des keilförmigen Verriegelungselements eine feste Verbindung zwischen dem Anschlusselement des Einachs- oder Mehrachsfahrzeugs und der Basisplatte des Anbaugeräts erzielt, wobei die Vorspannung diese Verbindung zusätzlich absichert und den Anpressdruck während des Betriebs immer gleichmässig aufrechterhält, damit die Verbindung zu jeder Zeit satt ansteht und auch bei der wiederholten Anwendung spielfrei bleibt. Somit wird diese Verbindung durch das mechanische Ankuppeln eines Anbaugeräts einzig anhand dieses genau einen, unter Vorspannung stehenden, keilförmigen Verriegelungselements erzielt, das die zentral an der Basisplatte angeordneten Fanglasche durchstösst.

Es hat sich gezeigt, dass eine einzige Verriegelungselement-Fanglaschen-Verbindung vollkommen ausreichend ist für einen zuverlässigen Halt für Anbaugeräte, wie sie oben beschrieben sind. Vorzugsweise wird zusätzlich eine Verdrehsicherung zwischen der Basisplatte und dem Anschlusselement angebracht. Eine solche Verdrehsicherung kann durch mindestens eine formschlüssige Passung zwischen der Basisplatte und dem Anschlusselement erreicht werden, beispielsweise durch eine Dorn-Konushülsen Passung. Vorzugsweise werden zwei, drei oder mehr solche Passungen angebracht, gleichmässig verteilt um die Fanglasche. Da das Verriegelungselement unter Vorspannung steht, ist gewährleistet, dass die Basisplatte dadurch immer an das Anschlusselement herangezogen wird, war die geforderte Spielfreiheit gewährleistet.

Im Vergleich zum Euro-Schnellwechselsystem, bei welchem drei Verriegelungselemente betätigt werden müssen, braucht beim erfindungsgemässen Schnellwechselsystem lediglich einzig das keilförmige Verriegelungselement betätigt zu werden. Zudem kann im Gegensatz zum Euro-Schnellwechselsystem beim erfindungsgemässen Schnellwechselsystem auf eine Schwenkbewegung während dem Ankuppeln gänzlich verzichtet werden. Somit kann mit dem erfindungsgemässen Schnellwechselsystem in einer im Wesentlichen horizontalen Bewegung (insbesondere beim Anfahren) ein Ankuppeln eines Anbaugeräts, beispielsweise eines Mähwerks, etc. erfolgen.

Im Vergleich zu dem aus dem Dokument DE 1 632 816 A1 bekannten, werkzeuglosen Schnellwechselsystem wird durch die Vorspannung nebst der mechanischen Stabilität auch die Sicherheit erhöht wird.

Letztlich hat das erfindungsgemässe Schnellwechselsystem den Vorteil, dass hierdurch leicht ein vollautomatisches Ankuppeln eines Anbaugeräts ermöglicht ist, ohne die Notwendigkeit eines manuellen Eingreifens. Beispielsweise kann diese zusätzliche, vollautomatische Ankupplungsfunktion mittels eines so genannten "Faster^{®}" - Systems erzielt werden, wodurch kein manuelles Eingreifen mehr notwendig ist.

Weitere vorteilhafte Ausgestaltungsformen sind in den abhängigen Patentansprüchen angegeben.

Vorzugsweise umfasst die Basisplatte mindestens eine, vorzugsweise zwei oder drei Dornen und das Anschlusselement mindestens eine, vorzugsweise zwei oder drei, mit den Dornen korrespondierende Hülsen, welche gemeinsam Kupplungen ausbilden. Dadurch kann ein Zwei- oder Dreipunkt-Schnellwechselsystem in Form einer Zwei- oder Dreipunktkupplung ausgebildet werden. Bei mehreren Kupplungen umgeben diese die zentrale Fanglasche gleichmässig.

Als Kupplung wird hier eine Positions-, Druck- und Verdrehsicherung verstanden, die, im Gegensatz zur einzigen Fanglasche, die mit dem keilförmigen Verriegelungselement gesichert werden kann, keine Zugsicherung aufweist. Sobald das einzige Verriegelungselement aus der einzigen Fanglasche entfernt ist, ist die Basisplatte vom Anschlusselement gelöst. Das Fahrzeug kann zurückfahren, während die Basisplatte an Ort bleibt.

Solche Dornen und beispielsweise als Konus ausgestaltete Hülsen haben den Vorteil, dass zusätzlich die Positionierung und Zentrierung des Anschlusselements an der Basisplatte und somit ein Ankuppeln eines Anbaugeräts in einer im Wesentlichen horizontalen Bewegung unterstützt und die Position hierdurch vollständig definiert wird. Als weiterer Vorteil können allfällige Torsionskräfte durch solche Dornen und Hülsen in Form einer Dreipunktkupplung auf drei Punkte aufgeteilt werden.

Dadurch, dass nur eine zentrale Verriegelung durchgeführt werden muss, vereinfacht sich die dafür notwendige Mechanik enorm. Es entfällt ein kompliziertes Gestänge, das anfällig ist für Verklemmungen zwischen den zahlreichen beweglichen Teilen. Der zentrale Sitz ist fest gesichert durch die Vorspannung, wobei die vorzugsweise zusätzlich angebrachten Dornen einen zusätzlichen Halt sowie eine Zentrierung zwischen der Basisplatte und dem Anschlusselement gewährleistet.

Ein weiterer Aspekt der vorliegenden Erfindung betrifft ein Einachs- oder Mehrachsfahrzeug, vorzugsweise ein einachsiger Motormäher, Kran oder Pflug, umfassend das erfindungsgemässe Schnellwechselsystem.

### Kurze Beschreibung der Zeichnungen

bevorzugte Ausführungsbeispiele des Erfindungsgegenstandes sind nachstehend im Zusammenhang mit den anliegenden Zeichnungen beschrieben. Es zeigen:
- Figur 1a: eine perspektivische Ansicht einer bevorzugten Ausführungsform des erfindungsgemässen Schnellwechselsystems;
- Figur 1b: eine perspektivische Ansicht einer Basisplatte;
- Figur 2: eine Schnittansicht einer bevorzugten Ausführungsform des erfindungsgemässen Schnellwechselsystems;
- Figur 3: eine perspektivische Ansicht eines Anschlusselements einer bevorzugten Ausführungsform des erfindungsgemässen Schnellwechselsystems;
- Figur 4a: eine weitere bevorzugte Ausführung gemäss Figur 1a mit alternativer Vorspannvorrichtung;
- Figur 4b, 4c: Schnittansicht der Verschlussvorrichtung mit dem keilförmigen Verriegelungselement;
- Figur 4c: perspektivische Ansicht der Verschlussvorrichtung mit dem keilförmigen Verriegelungselement.

### Beschreibung

Gleiche Referenzzeichen zeigen gleiche Komponenten in den Figuren.

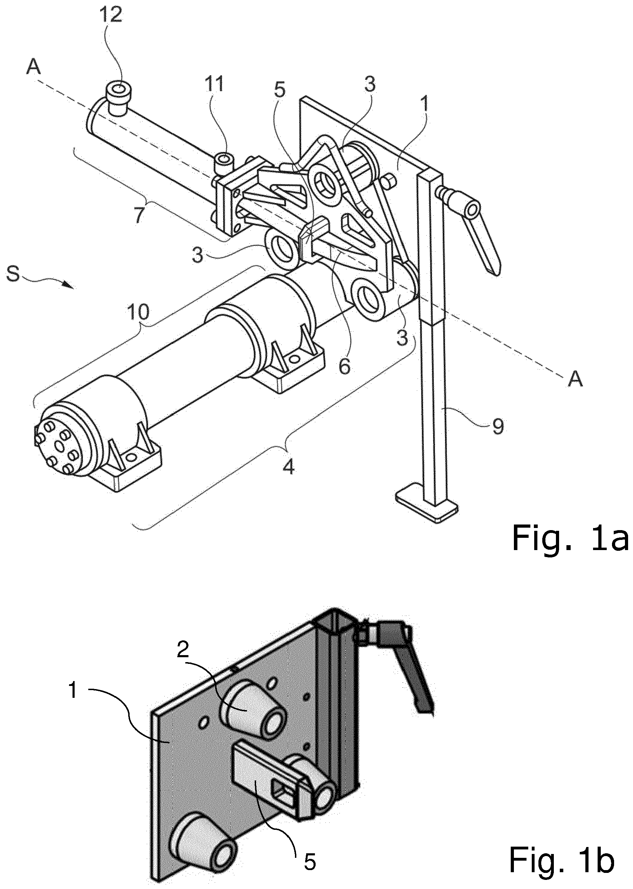

**Figur 1a** zeigt eine perspektivische Ansicht einer bevorzugten Ausführungsform eines erfindungsgemässen Schnellwechselsystems S für ein Einachs- oder Mehrachsfahrzeug, vorzugsweise einen einachsigen Motormäher, Kran oder Pflug, zum Ankuppeln eines hier nicht gezeigten Anbaugeräts, beispielsweise eines Mähwerks. Das Ankuppeln ist in einer im Wesentlichen horizontalen Bewegung möglich, insbesondere beim Anfahren des Fahrzeugs. Dieses hier werkzeuglos ausgestaltete Schnellwechselsystem S umfasst eine mit dem Einachs- oder Mehrachsfahrzeug fest verbundenes Anschlusselement 4 sowie eine Basisplatte 1 für ein Anbaugerät. In **Figur 1b** ist die Basisplatte alleine dargestellt.

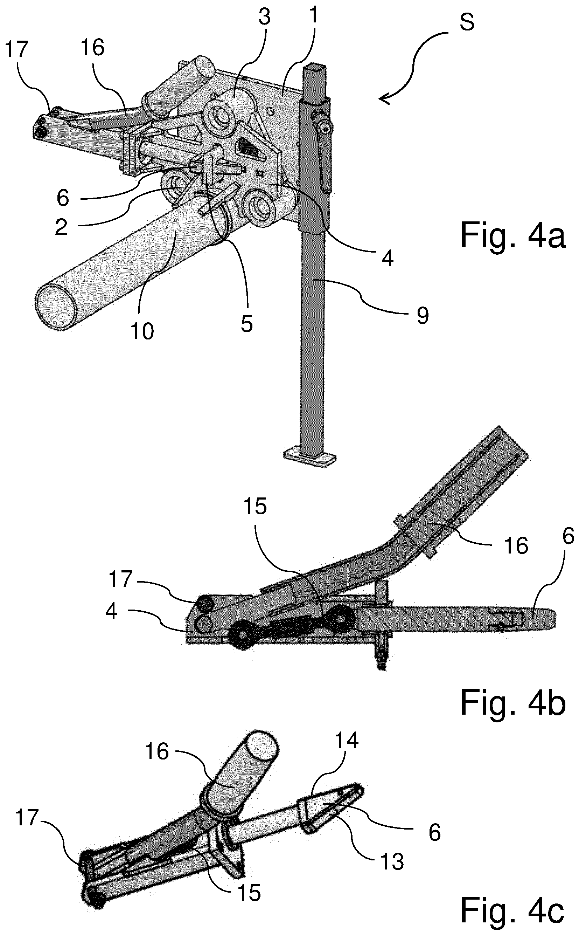

Dabei umfasst die Basisplatte 1 eine fest angeformte Fanglasche 5 zur Aufnahme eines keilförmig ausgestalteten Verriegelungselements 6, das auch in Fig. 4a-c dargestellt ist.

Wie in Fig. 1a ersichtlich ist dabei das keilförmige Verriegelungselement 6 derart ausgestaltet, so dass das keilförmige Verriegelungselement 6 in der Fanglasche 5 aufgenommen werden kann und dadurch eine lösbare Verbindung zwischen dem Anschlusselement 4 eines hier nicht gezeigten Einachs- oder Mehrachsfahrzeugs und der Basisplatte 1 eines hier nicht gezeigten Anbaugeräts hergestellt werden kann.

Das Verriegelungselement 6 weist zwei in einem spitzen Winkel zueinander verlaufende, gegenüber voneinander liegende Klemmflächen 13, 14 auf, wie auch in Fig. 4c dargestellt. Zur Befestigung durchstösst die Fanglasche 5 zunächst das Anschlusselement 4. Das Verriegelungselement 6 ist derart ausgestaltet und angeordnet, dass es in der Fanglasche 5 aufnehmbar ist und diese zur Arretierung des Anschlusselementes 4 durchstossen kann, wodurch die Basisplatte 1 mit den Anschlusselement 4 lösbar verbunden wird.

Erfindungsgemäss umfasst die Basisplatte 1 genau eine zentrale Fanglasche 5 zur zentralen Aufnahme eines einzigen keilförmigen Verriegelungselements 6. Dieses steht im verriegelten Zustand unter einer Vorspannung, wodurch die erste Klemmfläche 13 gegen die Fanglasche 5 der Basisplatte 1 und die zweite Klemmfläche 14 beidseitig der Fanglasche 5 gegen das Anschlusselement 4 gepresst wird, um die Basisplatte 1 spielfrei und zentral am Anschlusselement 4 zu sichern.

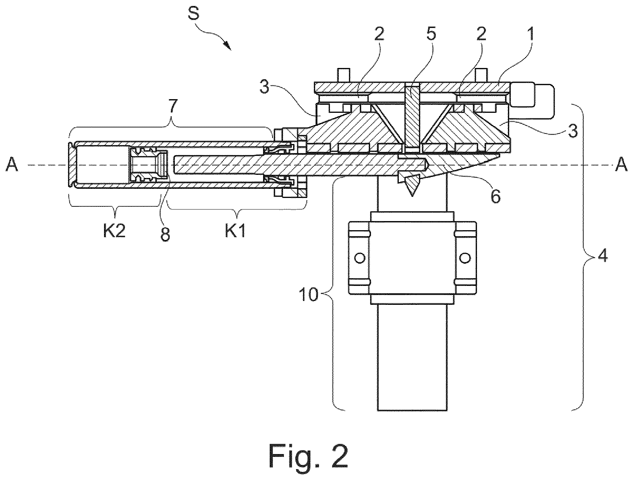

Das Anschlusselement 4 umfasst hier im Weiteren einen Balkenzapfen 10, welcher mit dem Hydrauliksystem eines hier nicht gezeigten Einachs- oder Mehrachsfahrzeugs und dem Hydrauliksystem eines hier nicht gezeigten Anbaugeräts in Wirkverbindung steht für den Betrieb des Anbaugeräts. Die Basisplatte 1 umfasst hierbei beispielhaft drei in Fig. 2 ersichtliche, fest angeformte Dornen 2 und das Anschlusselement 4 umfasst hier drei, mit den Dornen 2 korrespondierende hier als Konus ausgestaltete Hülsen 3, so dass vorzugsweise ein Dreipunkt-Schnellwechselsystem in Form einer Dreipunktkupplung ausgebildet wird.

Wie in Fig. 1a ersichtlich ist hier das keilförmige Verriegelungselement 6 fest verbunden mit einem hier vorzugsweise als Hydraulikzylinder 7 ausgestalteten, doppelwirkenden Zylinder zur Erzielung einer Vorspannung. Hierdurch steht das keilförmige Verriegelungselement 6 unter einer Vorspannung, wobei die Vorspannung diese Verbindung zwischen Basisplatte 1 und Anschlusselement 4 zusätzlich absichert. Gemäss einer der in Fig. 1a gezeigten, bevorzugten Ausführungsform ist hier der als Hydraulikzylinder ausgestaltete Druckzylinder über eine Verschraubung fest mit dem Anschlusselement 4 verbindbar beziehungsweise verbunden. Gemäss der hier gezeigten, bevorzugten Ausführungsform ist der hier als Hydraulikzylinder 7 ausgestaltete Druckzylinder mit einem hier nicht gezeigten Hydrauliksystem des Einachs- oder Mehrachsfahrzeugs, vorzugsweise einen einachsigen Motormäher, Kran oder Pflug, in Wirkverbindung bringbar, so dass die Hydraulikflüssigkeit des Einachs- oder Mehrachsfahrzeugs verwendet werden kann.

Besonders bevorzugt ist ein hier nicht gezeigter Einachs- oder Mehrachsfahrzeug, vorzugsweise ein einachsiger Motormäher, Kran oder Pflug, umfassend das erfindungsgemässe Schnellwechselsystem, derart ausgestaltet, so dass beispielsweise über ein 4/2 Wegeventil die Hydraulikflüssigkeit des Hydrauliksystems beziehungsweise der Arbeitshydraulik des Einachs- oder Mehrachsfahrzeugs in den als Hydraulikzylinder 7 ausgestalteten Druckzylinder abgeleitet werden kann. Somit ist vorzugsweise das Hydrauliksystem des hier nicht gezeigten Anbaugerätes derart integriert, so dass die schon vorhandene Arbeitshydraulik des Einachs- oder Mehrachsfahrzeugs genutzt werden kann.

Gemäss einer ersten, bevorzugten Variante wird die für die Vorspannung notwendige Druckbeaufschlagung lediglich mittels der Hydraulikflüssigkeit des Hydrauliksystems des Einachs- oder Mehrachsfahrzeugs erreicht. Insbesondere ist aus Sicherheitsgründen zwingend beziehungsweise besonders vorteilhaft bei dieser ersten, bevorzugten Variante das Hydrauliksystem des hier nicht gezeigten Anbaugeräts in die Arbeitshydraulik des Einachs- oder Mehrachsfahrzeugs integriert, so dass der eingestellte Druck im Betrieb offen beziehungsweise direkt (d.h. insbesondere stromlos und ohne Einsatz eines Ventils oder dergleichen) an der Kolbenbodenseite des Hydraulikzylinders 7 ansteht. Besonders bevorzugt liegt der Druckbereich, der für den Betrieb der Kupplung benötigt wird, bei Einachsfahrzeugen bei rund 110bar, während bei grösseren Ausführungen der Kupplung (d.h. insbesondere bei Anbaugeräten an Mehrachsfahrzeugen) der bevorzugte Druckbereich höher als 110bar liegt.

Gemäss einer weiteren, zweiten bevorzugten Variante gemäss Fig. 2 ist der Druckzylinder als gasgefüllter beziehungsweise befüllbarer, insbesondere mit elementarem Stickstoff N₂ gefüllter beziehungsweise befüllbarer, Hydraulikzylinder 7 ausgestaltet. Besonders bevorzugt ist hier eine für die Vorspannung notwendige Druckbeaufschlagung von 50 bis 180 bar, noch bevorzugter 100 bis 180 bar, am meisten bevorzugt etwa 110 bar erzielbar.

Alternativ oder zusätzlich ist es denkbar, dass das keilförmige Verriegelungselement mit einer Vorspannfeder fest verbunden ist zur Erzielung der Vorspannung. Hierdurch wird vorteilhaft eine besonders einfache, mechanische Lösung beziehungsweise Ausführungsform der erfindungsgemässen Schnellwechselsystems S erzielt.

Wie in den Figuren 1a und 4a gezeigt ist die Basisplatte 1 fest verbunden mit einem teleskopierbaren Stützfuss 9 mit einer, beispielsweise hier händig betätigbaren, Kurbel zur Arretierung einer horizontalen Lage. Dadurch wird ein Ankuppeln eines Anbaugeräts mittels einer im Wesentlichen horizontalen Bewegung zusätzlich begünstigt beziehungsweise erleichtert.

**Figur 2** zeigt eine in Fig. 1a angedeutete Schnittansicht A-A einer bevorzugten Ausführungsform des erfindungsgemässen Schnellwechselsystems S. Wie in der in Fig. 2 gezeigten Schnittansicht ersichtlich umfasst hier gemäss der weiteren, zweiten bevorzugten Variante der Hydraulikzylinder eine erste Kammer K1, wobei hier über eine erste Aufnahmeöffnung 11 die Hydraulikflüssigkeit des Hydrauliksystems aufnehmbar ist, sowie eine, von der ersten Kammer K1 abgetrennte, zweite Kammer K2, wobei hier über eine zweite Aufnahmeöffnung 12 ein Gas, insbesondere elementarer Stickstoff N₂, aufnehmbar ist.

Besonders bevorzugt umfasst hier der als Hydraulikzylinder 7 ausgestaltete Druckzylinder eine derartig ausgestaltete Dichtung 8, so dass die erste Kammer K1 zur Aufnahme von Hydraulikflüssigkeit sowie des keilförmigen Verriegelungselements 6 gasdicht abgetrennt ist von der zweiten Kammer K2 zur Aufnahme eines Gases, insbesondere elementarer Stickstoff N₂ oder dergleichen.

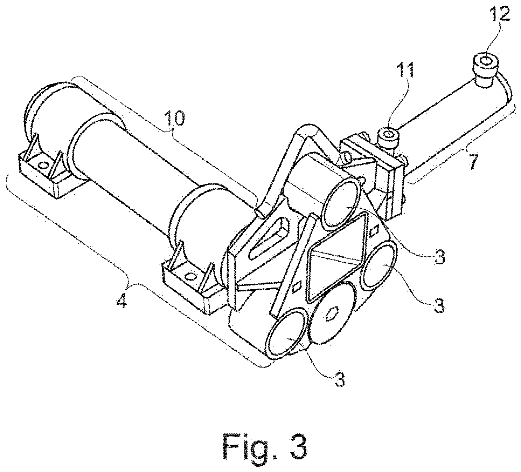

Wie auch in Fig. 1b ersichtlich ist, umfasst hierbei die Basisplatte 1 drei fest an die Basisplatte 1 angeformte Dornen 2, während das Anschlusselement 4, wie auch in Fig. 3 dargestellt, hier drei mit den Dornen 2 korrespondierende Hülsen 3 umfasst. Im Weiteren ist in Fig. 1b und 2 ersichtlich, wie hier die Basisplatte 1 genau eine zentral fest angeformte Fanglasche 5 umfasst, welche in einer vorne ausgestalteten Öffnung das keilförmig ausgestaltete Verriegelungselement 6 aufnehmen kann resp. aufnimmt. Aus Fig. 1b geht ebenfalls hervor, dass die Dornen 2 die Fanglasche 5 gleichmässig, hier sternförmig umgeben.

**Figur 3** zeigt eine perspektivische Ansicht eines Anschlusselements 4 der bevorzugten Ausführungsform eines erfindungsgemässen Schnellwechselsystems. In der in Fig. 3 gezeigten, perspektivischen Ansicht sind die drei Dornen 3 in einem gleichseitigen Dreieck angeordnet sichtbar, welche die hier nicht gezeigten Dornen 2 gemäss Fig. 1b aufnehmen können und dadurch eine Dreipunktkupplung realisieren können, welche die Fanglasche 5 umgeben. Die Fanglasche 5 wird dabei in einen mittig in Fig. 3 dargestellten Konus eingegeben, auch in Fig. 2 ersichtlich, um die zu zentrieren.

Figur 4a zeigt eine Figur gemäss Fig. 1a, wobei der Schliessmechanismus einen Hebel 16 umfasst, der das keilförmige Verriegelungselement 6 in der Fanglasche 5 verriegeln resp. entriegeln kann. Dieser Schliessmechanismus umfasst anstatt einen Druckzylinder hier eine Vorspannfeder 15, dargestellt in Fig. 4b, die an ihrem ersten Ende fest mit dem keilförmigen Verriegelungselement 6 verbunden ist, zur Erzielung der Vorspannung. Zudem ist die Vorspannfeder 15 an ihrem zweiten Ende fest, aber ebenfalls schwenkbar, mit dem Hebel 16 verbunden. Der Hebel 16 ist zudem schwenkbar mit dem Anschlusselement 4 verbunden.

Durch Umlegen des Hebels 16 verschiebt sich das keilförmige Verriegelungselement 6 jeweils von der verriegelten Stellung unter Vorspannung zur unverriegelten Stellung resp. umgekehrt.

Die Vorspannfeder 15 kann, nach einer ersten Ausführung, ein Verbindungselement sein, welches eine vorgespannte Feder umfasst, zum Aufbauen der Vorspannung im verriegelten Zustand.

In einer alternativen Ausführung kann die Vorspannfeder 15 durch das durch seine Materialeigenschaft stauchbare Verbindungselement ausgestaltet sein. Dieses ist derart am Hebel 16 befestigt, dass der Hebel 16 beim Umlegen einen Totpunkt überwindet, wodurch eine Spannung aufgebaut wird, welche das Verbindungselement staucht. In diesem Fall liegt die Federwirkung einerseits im stauchbaren Verbindungselement und zudem in der Materialstauchung des Verriegelungselements 6 und allfälliger weiterer Komponenten, die beim Überwinden des Totpunktes gestaucht werden, wenn auch nur minim.

Vorzugsweise ist eine Sicherungsvorrichtung 17, beispielsweise ein Splint 17 vorgesehen, zum Sichern des Hebels 16 in der verriegelten Stellung.

### Bezugszeichenliste

- 1: Basisplatte
- 2: Dorn (an der Basisplatte)
- 3: Hülse (am Anschlusselement)
- 4: Anschlusselement
- 5: Fanglasche
- 6: keilförmiges Verriegelungselement
- 7: Druckzylinder, Hydraulikzylinder
- 8: Dichtung
- 9: Stützfuss
- 10: Balkenzapfen
- 11: Erste Aufnahmeöffnung (zur Aufnahme der Hydraulikflüssigkeit)
- 12: Zweite Aufnahmeöffnung (zur Aufnahme eines Gases)
- 13: erste Klemmfläche
- 14: zweite Klemmfläche
- 15: Vorspannfeder
- 16: Hebel
- 17: Sicherungsvorrichtung; Splint
- K1: Erste Kammer (zur Aufnahme von Hydraulikflüssigkeit)
- K2: Zweite Kammer (zur Aufnahme eines Gases)
- S: Schnellwechselsystem

## Patentansprüche

1. Werkzeugloses Schnellwechselsystem (S) für ein Einachs- oder Mehrachsfahrzeugzum Ankuppeln eines Anbaugeräts, umfassend:
- ein mit dem Einachs- oder Mehrachsfahrzeug fest verbindbares Anschlusselement (4);
- eine Basisplatte (1) für ein Anbaugerät; wobei die Basisplatte (1) eine Fanglasche (5) zur zentralen Aufnahme eines einzigen keilförmigen Verriegelungselements (6) umfasst, wobei die Fanglasche (5) das Anschlusselement (4) durchstossen kann;
- ein keilförmiges Verriegelungselement (6),welches eine erste und eine zweite in einem spitzen Winkel zueinander verlaufende, gegenüber voneinander liegende Klemmflächen (13, 14) aufweist, wobei das keilförmige Verriegelungselement (6) derart ausgestaltet und angeordnet ist, dass es in der Fanglasche (5) aufnehmbar ist und diese durchstossen kann, und dadurch die Basisplatte (1) mit dem Anschlusselement (4) lösbar verbindbar ist;
**dadurch gekennzeichnet, dass**
die Basisplatte (1) genau eine zentrale Fanglasche (5) umfasst und das keilförmige Verriegelungselement (6) im verriegelten Zustand unter einer Vorspannung steht, wodurch die erste Klemmfläche (13) gegen die Fanglasche (5) der Basisplatte (1) und die zweite Klemmfläche (14) beidseitig der Fanglasche (5) gegen das Anschlusselement (4) gepresst wird, um die Basisplatte (1) spielfrei und zentral am Anschlusselement (4) zu sichern.

2. Werkzeugloses Schnellwechselsystem nach Patentanspruch 1, **dadurch gekennzeichnet, dass** die Basisplatte (1) mindestens eine, vorzugsweise drei Dornen (2) und das Anschlusselement (4) mindestens eine, vorzugsweise drei, mit den Dornen (2) korrespondierende Hülsen (3) umfasst, so dass ein Dreipunkt-Schnellwechselsystem in Form einer Dreipunktkupplung ausgebildet wird.

3. Werkzeugloses Schnellwechselsystem nach Patentanspruch 2, umfassend mindestens jeweils zwei, vorzugsweise jeweils drei Dornen (2) und Hülsen (3), **dadurch gekennzeichnet, dass** die Fanglasche (5) mittig zwischen den Dornen (2) angeordnet ist.

4. Werkzeugloses Schnellwechselsystem nach einem der Patentansprüche 1 bis 3, **dadurch gekennzeichnet, dass** ein Druckzylinder (7) und/oder eine Vorspannfeder (15) fest mit dem keilförmigen Verriegelungselement (6) verbunden ist zur Erzielung der Vorspannung.

5. Werkzeugloses Schnellwechselsystem nach Patentanspruch 4, **dadurch gekennzeichnet, dass** der Druckzylinder (7) und/oder die Vorspannfeder (15) mit dem Anschlusselement (4) fest verbindbar ist.

6. Werkzeugloses Schnellwechselsystem nach Patentanspruch 4 oder 5, **dadurch gekennzeichnet, dass** der Druckzylinder (7) als Hydraulikzylinder (7) ausgestaltet ist und dass der als Hydraulikzylinder (7) ausgestaltete Druckzylinder (7) mit dem Hydrauliksystem des Einachs- oder Mehrachsfahrzeugs, vorzugsweise einen einachsigen Motormäher, Kran oder Pflug, in Wirkverbindung bringbar ist, so dass die Hydraulikflüssigkeit des Einachs- oder Mehrachsfahrzeugs verwendet werden kann.

7. Werkzeugloses Schnellwechselsystem nach Patentanspruch 6, **dadurch gekennzeichnet, dass** über ein 4/2 Wegeventil die Hydraulikflüssigkeit des Hydrauliksystems des Einachs- oder Mehrachsfahrzeugs in den als Hydraulikzylinder (7) ausgestalteten Druckzylinder (7) abgeleitet werden kann.

8. Werkzeugloses Schnellwechselsystem nach einem der Patentansprüche 6 oder 7, **dadurch gekennzeichnet, dass** der Druckzylinder (7) vorzugsweise als gasgefüllter, insbesondere mit Stickstoff (N₂) gefüllter, Hydraulikzylinder (7) ausgestaltet ist.

9. Werkzeugloses Schnellwechselsystem nach einem der Patentansprüche 6 bis 8, **dadurch gekennzeichnet, dass** der als Hydraulikzylinder (7) ausgestaltete Druckzylinder (7) eine derartig ausgestaltete Dichtung (8) umfasst, so dass eine erste Kammer (K1) zur Aufnahme von Hydraulikflüssigkeit sowie des keilförmigen Verriegelungselements (6) gasdicht abgetrennt ist von einer zweiten Kammer (K2) zur Aufnahme eines Gases wie Stickstoff (N₂) oder dergleichen.

10. Werkzeugloses Schnellwechselsystem nach Patentanspruch 4 oder 5, **dadurch gekennzeichnet, dass** die Vorspannfeder (15) an einem ersten Ende fest mit dem keilförmigen Verriegelungselement (6) verbunden und mit einem zweiten Ende an einem Hebel (16) angebracht ist, wobei durch Umlegen des Hebels (16) das keilförmige Verriegelungselement (6) jeweils von der verriegelten Stellung unter Vorspannung zur unverriegelten Stellung wechselt resp. umgekehrt.

11. Werkzeugloses Schnellwechselsystem nach Patentanspruch 10, **dadurch gekennzeichnet, dass** die Vorspannfeder (15) ein Verbindungselement ist, welches eine vorgespannte Feder umfasst, zum Aufbauen der Vorspannung im verriegelten Zustand.

12. Werkzeugloses Schnellwechselsystem nach Patentanspruch 10, **dadurch gekennzeichnet, dass** die Vorspannfeder (15) selbst ein durch seine Materialeigenschaft stauchbares Verbindungselement ist und die Vorspannfeder (15) derart am Hebel (16) befestigt ist, dass der Hebel (16) beim Umlegen einen Totpunkt überwindet, wodurch eine Spannung aufgebaut werden kann.

13. Werkzeugloses Schnellwechselsystem nach einem der Patentansprüche 10 bis 12, **gekennzeichnet durch** eine Sicherungsvorrichtung (17), beispielsweise umfassend einen Splint (17), zum Sichern des Hebels (16) in der verriegelten Stellung.

14. Werkzeugloses Schnellwechselsystem nach einem der vorherigen Patentansprüche, **dadurch gekennzeichnet, dass** die Basisplatte (1) fest verbunden ist mit einem teleskopierbaren Stützfuss (9) mit mmmmmeiner Kurbel zur Einstellung einer horizontalen Lage.

15. Einachs- oder Mehrachsfahrzeug, vorzugsweise ein einachsiger Motormäher, Kran oder Pflug, umfassend ein Schnellwechselsystem nach einem der vorherigen Patentansprüche.

## Claims

1. A tool-free quick-change system (5) for a single-axle or multi-axle vehicle for coupling an add-on device, comprising:
- a connection element (4) that can be firmly connected to the single-axle or multi-axle vehicle;
- a base plate (1) for an add-on device; wherein the base plate (1) comprises a catch tab (5) for the central reception of a single wedge-shaped locking element (6), wherein the catch tab (5) can push through the connection element (4);
a wedge-shaped locking element (6), which comprises a first and a second clamping surfaces (13, 14) extending at an acute angle to one another and lying opposite one another, the wedge-shaped locking element (6) is configured and arranged in such a way that it can be accommodated in the catch tab (5) and can push through the latter, and the base plate (1) can be detachably connected to the connection element (4);
**characterised in that**
the base plate (1) comprises exactly one central catch tab (5) and the wedge-shaped locking element (6) is under a prestress in the locked state, whereby the first clamping surface (13) is pressed against the catch tab (5)) of the base plate (1) and the second clamping surface (14) is pressed on both sides of the catch tab (5) against the connection element (4) in order to secure the base plate (1) centrally on the connection element (4) without play.

2. Tool-free quick-change system according to patent claim 1, **characterised in that** the base plate (1) comprises at least one, preferably three, pins (2) and the connection element (4) comprises at least one, preferably three, sleeves (3) corresponding to the pins (2), so that a three-point quick-change system in the form of a three-point coupling is formed.

3. Tool-free quick-change system according to patent claim 2, comprising at least two, preferably three, pins (2) and sleeves (3), **characterised in that** the catch tab (5) is arranged centrally between the pins (2).

4. Tool-free quick-change system according to one of the patent claims 1 to 3, **characterised in that** a pressure cylinder (7) and/or a prestressing spring (15) is firmly connected to the wedge-shaped locking element (6) to achieve the prestressing.

5. Tool-free quick-change system according to patent claim 4, **characterised in that** the pressure cylinder (7) and/or the prestressing spring (15) can be firmly connected to the connection element (4).

6. Tool-free quick-change system according to patent claim 4 or 5, **characterised in that** the pressure cylinder (7) is designed as a hydraulic cylinder (7) and that the pressure cylinder (7) designed as a hydraulic cylinder (7) can be operatively connected to the hydraulic system of the single-axle or multi-axle vehicle, preferably a single-axle motor mower, crane or plough, so that the hydraulic fluid of the single-axle or multi-axle vehicle can be used.

7. Tool-free quick-change system according to patent claim 6, **characterised in that** the hydraulic fluid of the hydraulic system of the single-axle or multi-axle vehicle can be directed into the pressure cylinder (7) designed as a hydraulic cylinder (7) via a 4/2 directional control valve.

8. Tool-free quick-change system according to one of the patent claims 6 or 7, **characterised in that** the pressure cylinder (7) is preferably designed as a gas-filled hydraulic cylinder (7), in particular one filled with nitrogen (N2).

9. Tool-free quick-change system according to one of the patent claims 6 to 8, **characterised in that** the pressure cylinder (7) configured as a hydraulic cylinder (7) comprises a seal (8) configured in such a way that a first chamber (K1) for receiving hydraulic fluid and the wedge-shaped locking element (6) is separated in a gas-tight manner from a second chamber (K2) for receiving a gas such as nitrogen (N2) or the like.

10. Tool-free quick-change system according to patent claim 4 or 5, **characterised in that** the prestressing spring (15) is firmly connected at a first end to the wedge-shaped locking element (6) and is attached by a second end to a lever (16), wherein by turning the lever (16) the wedge-shaped locking element (6) changes from the locked position to the unlocked position under prestress or vice versa.

11. Tool-free quick-change system according to patent claim 10, **characterised in that** the prestressing spring (15) is a connecting element which comprises a prestressed spring for building up the prestressing in the locked state.

12. Tool-free quick-change system according to patent claim 10, **characterised in that** the prestressing spring (15) itself is a connecting element that can be compressed due to its material properties and the prestressing spring (15) is attached to the lever (16) in such a way that the lever (16) overcomes a dead centre when it is flipped over, allowing tension to be built up.

13. Tool-free quick-change system according to one of patent claims 10 to 12, **characterised by** a locking device (17), for example comprising a split pin (17), for securing the lever (16) in the locked position.

14. Tool-free quick-change system according to one of the previous patent claims, **characterised in that** the base plate (1) is firmly connected to a telescopic support foot (9) with a crank for adjusting a horizontal position.

15. A single-axle or multi-axle vehicle, preferably a single-axle motor mower, crane or plough, comprising a quick-change system according to one of the previous patent claims.

## Revendications

1. Système de changement rapide sans outil (S) pour un véhicule à un ou plusieurs essieux pour le couplage d'un équipement auxiliaire, comprenant :
- un élément de raccordement (4) configuré afin de pouvoir être relié de manière fixe au véhicule à un ou plusieurs essieux ;
- une plaque de base (1) pour un équipement auxiliaire ; dans lequel la plaque de base (1) comprend une languette d'accrochage (5) pour la réception centrale d'un élément de verrouillage unique en forme de coin (6), dans lequel la languette d'accrochage (5) est configurée de manière à pouvoir traverser l'élément de raccordement (4) ;
- un élément de verrouillage en forme de coin (6), présentant une première et une deuxième surfaces de serrage (13, 14) opposées l'une à l'autre et s'étendant selon un angle aigu l'une par rapport à l'autre, dans lequel l'élément de verrouillage en forme de coin (6) est configuré et disposé de telle sorte qu'il peut être reçu dans la languette d'accrochage (5) et peut traverser celle-ci, et que la plaque de base (1) est ainsi reliable de manière amovible à l'élément de raccordement (4) ;
**caractérisé en ce que**
la plaque de base (1) comprend exactement une languette d'accrochage centrale (5) et l'élément de verrouillage en forme de coin (6), dans l'état verrouillé, est sous une précontrainte, ce qui a pour conséquence que la première surface de serrage (13) est pressée contre la languette d'accrochage (5) de la plaque de base (1) et la deuxième surface de serrage (14) est pressée contre l'élément de raccordement (4) des deux côtés de la languette d'accrochage (5), afin de bloquer la plaque de base (1) sans jeu et de manière centrale sur l'élément de raccordement (4).

2. Système de changement rapide sans outil selon la revendication 1, **caractérisé en ce que** la plaque de base (1) comprend au moins un, de préférence trois mandrins (2) et l'élément de raccordement (4) comprend au moins un, de préférence trois manchons (3) correspondant aux mandrins (2), de sorte qu'un système de changement rapide à trois points est configuré sous la forme d'un couplage à trois points.

3. Système de changement rapide sans outil selon la revendication 2, comprenant au moins à chaque fois deux, de préférence à chaque fois trois mandrins (2) et manchons (3), **caractérisé en ce que** la languette d'accrochage (5) est disposée au milieu entre les mandrins (2).

4. Système de changement rapide sans outil selon l'une des revendications 1 à 3, **caractérisé en ce qu'**un cylindre de pression (7) et/ou un ressort de précontrainte (15) est relié de manière fixe à l'élément de verrouillage en forme de coin (6) pour obtenir la précontrainte.

5. Système de changement rapide sans outil selon la revendication 4, **caractérisé en ce que** le cylindre de pression (7) et/ou le ressort de précontrainte (15) est configuré de manière à pouvoir être relié de manière fixe à l'élément de raccordement (4).

6. Système de changement rapide sans outil selon la revendication 4 ou 5, **caractérisé en ce que** le cylindre de pression (7) est conçu sous la forme d'un cylindre hydraulique (7) et **en ce que** le cylindre de pression (7) conçu sous la forme d'un cylindre hydraulique (7) est configuré de manière à pouvoir être amené en liaison active avec le système hydraulique du véhicule à un ou plusieurs essieux, de préférence une moto-faucheuse à un essieu, une grue ou une charrue, de sorte que le liquide hydraulique du véhicule à un ou plusieurs essieux soit utilisable.

7. Système de changement rapide sans outil selon la revendication 6, **caractérisé en ce que** le liquide hydraulique du système hydraulique du véhicule à un ou plusieurs essieux est évacuable par le biais d'une soupape à 4/2 voies dans le cylindre de pression (7) conçu sous la forme d'un cylindre hydraulique (7).

8. Système de changement rapide sans outil selon l'une des revendications 6 ou 7, **caractérisé en ce que** le cylindre de pression (7) est conçu de préférence sous la forme d'un cylindre hydraulique (7) rempli de gaz, notamment rempli d'azote (N₂).

9. Système de changement rapide sans outil selon l'une des revendications 6 à 8, **caractérisé en ce que** le cylindre de pression (7) conçu sous la forme d'un cylindre hydraulique (7) comprend un joint d'étanchéité (8) conçu de telle sorte qu'une première chambre (K1) destinée à la réception de liquide hydraulique ainsi que de l'élément de verrouillage en forme de coin (6) est séparée de manière étanche aux gaz d'une deuxième chambre (K2) destinée à la réception d'un gaz tel que de l'azote (N₂) ou similaire.

10. Système de changement rapide sans outil selon la revendication 4 ou 5, **caractérisé en ce que** le ressort de précontrainte (15) est relié de manière fixe au niveau d'une première extrémité à l'élément de verrouillage en forme de coin (6) et est monté au niveau d'une deuxième extrémité sur un levier (16), dans lequel l'élément de verrouillage en forme de coin (6) change à chaque fois de la position verrouillée sous précontrainte à la position déverrouillée, ou inversement, par basculement du levier (16).

11. Système de changement rapide sans outil selon la revendication 10, **caractérisé en ce que** le ressort de précontrainte (15) est un élément de liaison qui comprend un ressort précontraint pour l'établissement de la précontrainte à l'état verrouillé.

12. Système de changement rapide sans outil selon la revendication 10, **caractérisé en ce que** le ressort de précontrainte (15) est lui-même un élément de liaison compressible par sa propriété de matériau et le ressort de précontrainte (15) est fixé au levier (16) de telle sorte que le levier (16) surmonte un point mort lors du basculement, ce qui permet d'établir une tension.

13. Système de changement rapide sans outil selon l'une des revendications 10 à 12, **caractérisé par** un dispositif de fixation (17), comprenant par exemple une goupille (17), pour la sécurisation du levier (16) en position verrouillée.

14. Système de changement rapide sans outil selon l'une des revendications précédentes, **caractérisé en ce que** la plaque de base (1) est reliée de manière fixe à un pied d'appui télescopique (9) avec une manivelle pour le réglage d'une position horizontale.

15. Véhicule à un ou plusieurs essieux, de préférence une moto-faucheuse à un essieu, une grue ou une charrue, comprenant un système de changement rapide selon l'une des revendications précédentes.
